(19) Europäisches Patentamt / European Patent Office / Office européen des brevets

(11) **EP 3 989 217 B1**

(12) **EUROPEAN PATENT SPECIFICATION**

(45) Date of publication and mention of the grant of the patent:
**27.09.2023 Bulletin 2023/39**

(21) Application number: **20203448.4**

(22) Date of filing: **22.10.2020**

(51) International Patent Classification (IPC):
**G10L 15/08** (2006.01)        **G10L 15/20** (2006.01)
**G10L 13/00** (2006.01)        **G10L 25/24** (2013.01)
**G10L 25/51** (2013.01)

(52) Cooperative Patent Classification (CPC):
**G10L 15/08; G10L 15/20;** G10L 13/00; G10L 25/24;
G10L 25/51

(54) **METHOD FOR DETECTING AN AUDIO ADVERSARIAL ATTACK WITH RESPECT TO A VOICE INPUT PROCESSED BY AN AUTOMATIC SPEECH RECOGNITION SYSTEM, CORRESPONDING DEVICE, COMPUTER PROGRAM PRODUCT AND COMPUTER-READABLE CARRIER MEDIUM**

VERFAHREN ZUM ERKENNEN EINES FEINDLICHEN AUDIOANGRIFFS IN BEZUG AUF EINE SPRACHEINGABE, DIE VON EINEM AUTOMATISCHEN SPRACHERKENNUNGSSYSTEM VERARBEITET WIRD, ENTSPRECHENDE VORRICHTUNG, COMPUTERPROGRAMMPRODUKT UND COMPUTERLESBARES TRÄGERMEDIUM

PROCÉDÉ POUR DÉTECTER UNE ATTAQUE AUDIO ADVERSE PAR RAPPORT À UNE ENTRÉE VOCALE TRAITÉE PAR UN SYSTÈME DE RECONNAISSANCE VOCALE AUTOMATIQUE, DISPOSITIF CORRESPONDANT, PRODUIT PROGRAMME INFORMATIQUE ET SUPPORT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.04.2022 Bulletin 2022/17**

(73) Proprietor: **THOMSON LICENSING**
**35510 Cesson-Sévigné (FR)**

(72) Inventors:
• **NADEAU, Pascal**
  **35576 CESSON-SEVIGNE (FR)**
• **GILBERTON, Philippe**
  **35576 CESSON-SEVIGNE (FR)**
• **GAUTIER, Eric**
  **35576 CESSON-SEVIGNE (FR)**
• **DELAUNAY, Christophe**
  **35576 CESSON-SEVIGNE (FR)**

(74) Representative: **Vidon Brevets & Stratégie**
**16B, rue de Jouanet**
**BP 90333**
**35703 Rennes Cedex 7 (FR)**

(56) References cited:
• **KRISHAN RAJARATNAM ET AL: "Isolated and Ensemble Audio Preprocessing Methods for Detecting Adversarial Examples against Automatic Speech Recognition", ARXIV.ORG, CORNELL UNIVERSITY LIBRARY, 201 OLIN LIBRARY CORNELL UNIVERSITY ITHACA, NY 14853, 11 September 2018 (2018-09-11), XP081190308,**
• **DU XIA YB77479@UMAC MO ET AL: "A Unified Framework for Detecting Audio Adversarial Examples", PROCEEDINGS OF THE 28TH ACM INTERNATIONAL CONFERENCE ON MULTIMEDIA, ACMPUB27, NEW YORK, NY, USA, 12 October 2020 (2020-10-12), pages 3986-3994, XP058478222, DOI: 10.1145/3394171.3413603 ISBN: 978-1-4503-7988-5**
• **ZHUOLIN YANG ET AL: "Characterizing Audio Adversarial Examples Using Temporal Dependency", ARXIV.ORG, CORNELL UNIVERSITY LIBRARY, 201 OLIN LIBRARY CORNELL UNIVERSITY ITHACA, NY 14853, 28 September 2018 (2018-09-28), XP081368300,**

- **TAMURA KEIICHI ET AL: "Novel Defense Method against Audio Adversarial Example for Speech-to-Text Transcription Neural Networks", 2019 IEEE 11TH INTERNATIONAL WORKSHOP ON COMPUTATIONAL INTELLIGENCE AND APPLICATIONS (IWCIA), IEEE, 9 November 2019 (2019-11-09), pages 115-120, XP033684960, DOI: 10.1109/IWCIA47330.2019.8955062 [retrieved on 2020-01-09]**
- **TIANYU DU ET AL: "SirenAttack: Generating Adversarial Audio for End-to-End Acoustic Systems", ARXIV.ORG, CORNELL UNIVERSITY LIBRARY, 201 OLIN LIBRARY CORNELL UNIVERSITY ITHACA, NY 14853, 23 January 2019 (2019-01-23), XP081007174,**

**Description**

**Field of the disclosure**

The present disclosure relates generally to the field of speech recognition. More particularly, the present disclosure relates to the field of automatic speech recognition systems, and pertains to a technique that allows detecting audio adversarial attack on such systems.

**Background**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

More and more devices, including general public consumer devices - such as smartphones, tablets, set-top box, speakers, television set - are now provided with speech recognition features, allowing their users to use voice commands to make these devices perform various tasks. For example, voice commands may be used to search the Internet, initiate a phone call, play a specific song on a speaker, control home automation devices such as connected lightning, connected door lock, etc.

The implementation of these speech recognition features, sometimes gathered under the name of "voice assistants" (among which stand out Apple's Siri, Microsoft's Cortana, Amazon's Alexa, Google Assistant, etc.), relies mostly on automatic speech recognition systems using machine-learning-based systems (such as, for example, neural networks or deep neural networks, which have demonstrated their effectiveness in this field) as computational core. An audio signal corresponding to the voice command is provided as an input of the machine-learning-based system, which has been trained so as to be able to output a transcript expected to be a word for word transcript of the voice command as originally spoken by the user.

However, it has been demonstrated that machine learning systems such as deep neural networks may be vulnerable to adversarial perturbations: for example, by intentionally adding specific but imperceptible perturbations on an input of a deep neural network, an attacker is able to generate an adversarial example specifically designed to mislead the neural network. In the context of automatic speech recognition systems, an original voice command may be hacked by being mixed with a more or less imperceptible malicious noise, without the user noticing it: the hacked speech sounds exactly the same to the user. Such a malicious noise may have been specifically constructed by the attacker so that the transcript outputted by the machine-learning-based system corresponds to a target command significantly different than the original one. This gives rise to serious security issues, since such audio adversarial attacks may be used to cause a device to execute malicious and unsolicited tasks, such as unwanted internet purchasing, unwanted control of connected objects acting on front door, windows, central heating unit, etc.

Exemplary approaches for detection of audio adversarial attacks are disclosed in documents [1]-[5].

Some solutions have been proposed in an attempt to counter these audio adversarial attacks. A first approach consists of enriching the training set of the automatic speech recognition system with sample phrases which are known to be hacked, so that the system can learn to reject them. A major drawback of this solution is that it engages the automatic speech recognition system designers in a never-ending race against hackers. A second approach consists of requiring an authentication of the user before an automatic speech recognition system accepts any commands from him. However, this solution has limitations. For example, once the user is authenticated, this technique doesn't allow determining whether the voice commands which are received afterwards are hacked or not. Another solution based on user authentication consists of training the automatic speech recognition system to recognize and accept only voice commands spoken with a specific voice, i.e. the user's voice. It then becomes harder for someone with a non-trained voice to take control over the device. However, this technique requires the user to train his new device before being able to use it, which may appear too constraining. A third approach consists of applying some transformations (e.g. mp3 compression, bit quantization, filtering, down-sampling, adding noise, etc.) on the audio input data in order to disrupt the adversarial perturbations before passing it to the machine-learning-based automatic speech recognition system. However, the transformations applied sometimes remain insufficient to counteract the attack. Furthermore, they may affect performance on benign samples. A fourth approach, focused on neural-network-based machine learning systems, is based on the assumption that adversarial noised samples produce anomalous activations in a neural network, and consists of searching for such anomalous activations in internal layers of the neural network in order to detect adversarial attacks. However, this solution is highly-dependent on the neural network architecture used to train the automatic speech recognition model. Furthermore, implementing such a solution may cause a significant increase of computational cost, which may affect the overall performance of the system.

It would hence be desirable to provide a technique that would avoid at least some of these drawbacks of the prior art, and that would notably allow an efficient detection of audio adversarial attacks, making it possible to reject hacked speech while maintaining the highest possible accuracy of recognition of non-hacked speech. Furthermore, it would be desirable that the provided technique does not depend on the machine learning architecture used to train the automatic speech recognition model, and that it doesn't rely either on systems likely to be themselves the target of adversarial attack.

[1] KRISHAN RAJARATNAM ET AL: "Isolated and Ensemble Audio Preprocessing Methods for Detecting Adversarial Examples against Automatic Speech Recognition", ARXIV.ORG, CORNELL UNIVERSITY LIBRARY, 201 OLIN LIBRARY CORNELL UNIVERSITY ITHACA, NY 14853, 11 September 2018

[2] DU XIA ET AL: "A Unified Framework for Detecting Audio Adversarial Examples", PROCEEDINGS OF THE 28TH ACM INTERNATIONAL CONFERENCE ON MULTIMEDIA, NEW YORK, NY, USA, 12 October 2020, pages 3986-3994

[3] ZHUOLIN YANG ET AL: "Characterizing Audio Adversarial Examples Using Temporal Dependency", ARXIV.ORG, CORNELL UNIVERSITY LIBRARY, 201 OLIN LIBRARY CORNELL UNIVERSITY ITHACA, NY 14853, 28 September 2018

[4] TAMURA KEIICHI ET AL: "Novel Defense Method against Audio Adversarial Example for Speech-to-Text Transcription Neural Networks", 2019 IEEE 11TH INTERNATIONAL WORKSHOP ON COMPUTATIONAL INTELLIGENCE AND APPLICATIONS (IWCIA), IEEE, 9 November 2019, pages 115-120

[5] TIANYU DU ET AL: "SirenAttack: Generating Adversarial Audio for End-to-End Acoustic Systems", ARXIV.ORG, CORNELL UNIVERSITY LIBRARY, 201 OLIN LIBRARY CORNELL UNIVERSITY ITHACA, NY 14853, 23 January 2019

## Summary

According to the present disclosure, a method for detecting an audio adversarial attack with respect to a voice input processed by an automatic speech recognition system is proposed. The method, implemented by a detection device connected to the automatic speech recognition system, includes: obtaining an input audio signal associated with the voice input; obtaining a transcript resulting from the processing, by the automatic speech recognition system, of the input audio signal; converting the transcript into a synthesized audio signal associated with a target text-to-speech voice; extracting, at a sampling time interval, at least one acoustic feature of a same type, respectively from the input audio signal and from the synthesized audio signal, delivering a first sequence of features vectors associated with the input audio signal and a second sequence of features vectors associated with the synthesized audio signal; converting the acoustic features of the first sequence of features vectors and the acoustic features of the second sequence of features vectors to corresponding acoustic features associated with a target reference voice, respectively delivering a first sequence of converted features vectors associated with the input audio signal and a second sequence of converted features vectors associated with the synthesized audio signal; computing a dynamic time warping distance between the first sequence of converted features vectors and the second sequence of converted features vectors; and delivering a piece of data representative of a detection of an audio adversarial attack, as a function of a result of a comparison between the dynamic time warping distance and a predetermined threshold. The proposed technique thus makes it possible to detect an audio adversarial attack in an efficient manner, which is furthermore not dependent on the machine learning architecture used by the automatic speech recognition system.

According to an embodiment the at least one acoustic feature belongs to the group of mel-cepstrum coefficients and the dynamic time warping distance is a mel-cepstral-distortion-based dynamic time warping distance.

According to an embodiment, the method includes normalizing the input audio signal and the synthesized audio signal, before extracting the at least one acoustic feature from the signals.

According to a particular feature of this embodiment, normalizing the input audio signal and the synthesized audio signal includes performing power normalization and/or silence part elimination on the signals.

According to an embodiment, the target text-to-speech voice and the target reference voice correspond to a same voice.

According to an embodiment, the method includes normalizing the dynamic time warping distance before comparing the dynamic time warping distance with the predetermined threshold, by dividing the computed dynamic time warping distance by the number of features vectors of the longest sequence, among the first sequence of converted features vectors and the second sequence of converted features vectors.

According to an embodiment, the method includes identifying a gender associated with the input audio signal, and the gender of the target text-to-speech voice and the gender of the target reference voice are configured to be the same as the identified gender.

According to another embodiment, converting the transcript, extracting at least one acoustical feature, converting the extracted acoustical features and computing a dynamic time warping distance are carried out twice, once with a first target text-to-speech voice and a first target reference voice associated with a male gender, delivering a first dynamic time warping distance associated with a male gender, and once with a second target text-to-speech voice and a second target reference voice associated with a female gender, delivering a second dynamic time warping distance associated with a female gender; and delivering a piece of data representative of a detection of an audio adversarial attack is carried out as a function of a result of a comparison between the predetermined threshold and the minimum dynamic time warping distance between the first and second dynamic time warping distances.

According to an embodiment, the method further includes transmitting the piece of data representative of a detection of an audio adversarial attack to a communication device in charge of executing an action associated with the voice input.

The present disclosure also relates to a detection device for detecting an audio adversarial attack with respect to a voice input processed by an automatic speech recognition system. The detection device, connected to directly or indirectly to the automatic speech recognition system, includes at least one processor configured for: obtaining an input audio signal associated with the voice input; obtaining a transcript resulting from the processing, by the automatic speech recognition system, of the input audio signal; converting the transcript into a synthesized audio signal associated with a target text-to-speech voice; extracting, at a sampling time interval, at least one acoustic feature of a same type, respectively from the input audio signal and from the synthesized audio signal, delivering a first sequence of features vectors associated with the input audio signal and a second sequence of features vectors associated with the synthesized audio signal; converting the acoustic features of the first sequence of features vectors and the acoustic features of the second sequence of features vectors to corresponding acoustic features associated with a target reference voice, respectively delivering a first sequence of converted features vectors associated with the input audio signal and a second sequence of converted features vectors associated with the synthesized audio signal; computing a dynamic time warping distance between the first sequence of converted features vectors and the second sequence of converted features vectors; and delivering a piece of data representative of a detection of an audio adversarial attack, as a function of a result of a comparison between the dynamic time warping distance and a predetermined threshold.

According to an embodiment, the detection device is connected to or embedded into a communication device configured to process the voice input together with the automatic speech recognition system.

According to another embodiment, the detection device is located on a cloud infrastructure service, alongside with the automatic speech recognition system.

According to one implementation, the different steps of the method for detecting an audio adversarial attack with respect to a voice input processed by an automatic speech recognition system as described here above are implemented by one or more software programs or software module programs including software instructions intended for execution by at least one data processor of a detection device connected to directly or indirectly to the automatic speech recognition system.

Thus, another aspect of the present disclosure pertains to at least one computer program product downloadable from a communication network and/or recorded on a medium readable by a computer and/or executable by a processor, including program code instructions for implementing the method as described above. More particularly, this computer program product includes instructions to command the execution of the different steps of a method for detecting an audio adversarial attack with respect to a voice command processed by an automatic speech recognition system, as mentioned here above.

This program can use any programming language whatsoever and be in the form of source code, object code or intermediate code between source code and object code, such as in a partially compiled form or any other desirable form whatsoever.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

In addition, the present disclosure also concerns a non-transitory computer-readable medium including a computer program product recorded thereon and capable of being run by a processor, including program code instructions for implementing the above-described method for detecting an audio adversarial attack with respect to a voice command processed by an automatic speech recognition system.

The computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

**Brief description of the drawings**

Embodiments of the present disclosure can be better understood with reference to the following description and drawings, given by way of example, and in which:

- **Figure 1** is a flow chart for illustrating the general principle of the proposed technique for detecting an audio adversarial attack with respect to a voice input processed by an automatic speech recognition system, according to an embodiment of the present disclosure;
- **Figures 2** is a simplified flow chart for illustrating how the proposed technique may be adapted to deal with cross-gender consideration, according to an embodiment of the present disclosure;
- **Figure 3** is a schematic block diagram illustrating an example of a detection device for detecting an audio adversarial attack with respect to a voice input processed by an automatic speech recognition system, according to an embodiment of the present disclosure; and
- **Figures 4a, 4b and 4c** show different configurations for the location of a detection device, according to various embodiments of the present disclosure.

The components in the figures are not necessarily to scale, emphasis instead being placed upon illustrating the principles of the disclosure.

**Detailed description**

The present disclosure relates to a method for detecting an audio adversarial attack with respect to a voice input processed by an automatic speech recognition system. As it will be described more fully hereafter with reference to the accompanying figures, the proposed technique is easy to implement, machine-learning-system-agnostic (i.e. independent of the machine learning architecture on which the automatic speech recognition system is based) and it makes it possible to determine in an effective way whether or not a voice input has been hacked and turned into an adversarial example. The detection may be achieved within a short period of time, thus allowing preventing a malicious command associated with an adversarial example from being executed. This objective is reached, according to the general principle of the disclosure, by comparing acoustical features extracted from a voice input, before and after it has been processed by an automatic speech recognition system.

This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the scope of the disclosure as defined by the claims. In the drawings, like or similar elements are designated with identical reference signs throughout the several views thereof.

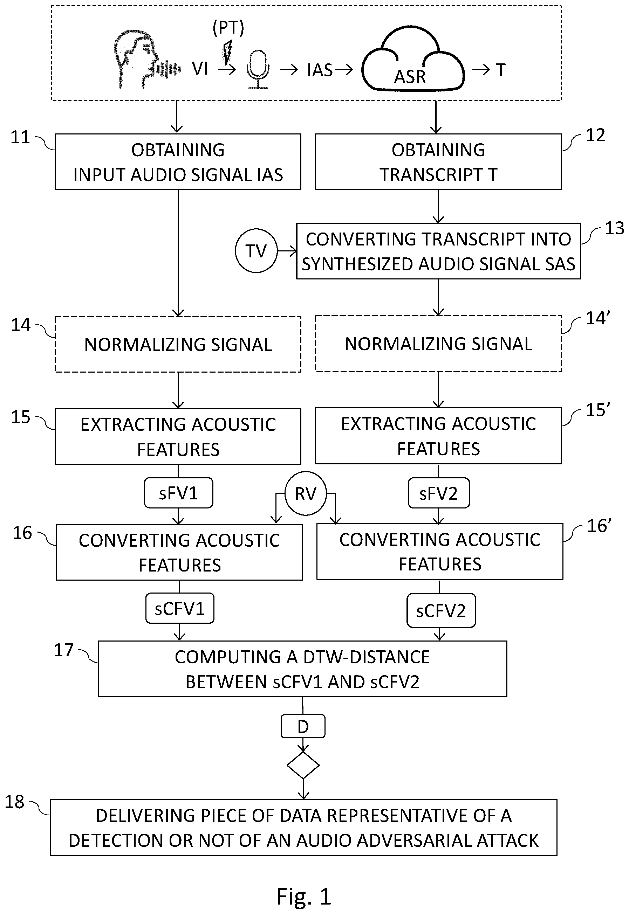

**Figure 1** is a flow chart for describing a method for detecting an audio adversarial attack with respect to a voice input VI processed by a machine-learning-based automatic speech recognition system ASR (such as for example a neural-network-based automatic speech recognition system), according to an embodiment of the present disclosure. The method is implemented by a detection device connected to the automatic speech recognition system ASR, either directly or through a communication device such as a communication device intended to execute a command associated with the voice input for example. The detection device, which is further detailed in one embodiment later in this document, includes at least one processor adapted and configured for carrying out the steps described hereafter.

At step 11, the detection device obtains an input audio signal IAS associated with the voice input VI. The input audio signal IAS corresponds to the signal provided as an input of the automatic speech recognition system ASR for the processing of the voice input VI. The input audio signal IAS may, for example, be obtained from a microphone connected to or embedded in the detection device itself, or it may be received from a communication device intended to process the voice input VI along with the automatic speech recognition system ASR. By "input *audio signal associated with the voice input",* it is meant here that the generation of the input audio signal IAS is linked to the voice input VI. In the typical case where the voice input VI is not subjected to an audio adversarial attack, the input audio signal IAS corresponds to a recording of the voice input VI (along with possible presence of a benign background noise). However, in case of an audio adversarial attack, the input audio signal IAS corresponds to a mix between the voice input VI and a more or less imperceptible malicious noise (perturbation PT on figure 1) specifically designed by an attacker to mislead the machine-learning-based automatic speech recognition system. At this stage, such an attack has not been detected yet.

At step 12, the detection device obtains a transcript T resulting from the processing, by the automatic speech recognition system, of the input audio signal IAS. Depending on where the detection device is located, the transcript T may be obtained directly from the automatic speech recognition system, or it may be received through a communication device. In the case where the voice input VI is not the target of an audio adversarial attack, the output of the automatic speech recognition system is normally representative of a word for word transcript (or at least of a rather close word for word transcript) of the voice input VI as originally spoken by the user of the automatic speech recognition system. However, in case of an audio adversarial attack, the deep neural network ruling the automatic speech recognition system is misled and outputs a transcript T that is not representative of the voice input VI. Depending on the attack, the transcript T may even be representative of a totally different command than the original one.

At step 13, a text-to-speech operation is performed on the text transcript T delivered by the automatic speech recognition system. This operation may be carried out by the detection device alone. Alternatively, the detection device may rely on a third-party text-to-speech service (such as Google text-to-speech service for example) to carry out this operation. The text-to-speech operation results in the conversion of transcript T into a synthesized audio signal SAS associated with a target text-to-speech voice TV.

According to the proposed technique, the input audio signal IAS and the synthesized audio signal SAS are then processed independently, but through a similar processing chain including normalizing the audio signal (at optional step 14 for the input audio signal, respectively optional step 14' for the synthesized audio signal), extracting acoustic features from the audio signal (at step 15 for the input audio signal, respectively step 15' for the synthesized audio signal), and converting the extracted acoustic features (at step 16 for the input audio signal, respectively step 16' for the synthesized audio signal). The different steps of this processing chain are further detailed hereafter.

Before further processing, an optional normalization process may be carried out on both the input audio signal IAS and the synthesized audio signal SAS, respectively at steps 14 and 14'. According to an embodiment, such a normalization process includes power normalization and/or silence part elimination.

The power normalization process aims at reducing as much as possible the signal level difference related to the two audio signals - the input audio signal IAS and the synthesized audio signal SAS - being considered that the input audio signal IAS is a recorded human voice signal while the synthesized audio signal SAS is an artificially generated synthesized voice signal. According to an embodiment, to impact as less as possible the two audio signals, it is proposed to carry out a peak normalization including adjusting the highest sample value of each signal to an identical given value, e.g. the 0 dBFS (Decibels relative to Full Scale) value.

The silence part elimination process aims at reducing the differences regarding the position and duration of the silence parts in the input audio signal and in the synthesized audio signal. Furthermore, this process enable saving processing resources by deactivating speech processing whenever audio signal does not contain speech. The silence part elimination process includes filtering the input audio signal IAS and the synthesized audio signal SAS through a silence detection algorithm that eliminates the segments of the signals with lowest energy. According to an embodiment, Voice Activity Detection (VAD) techniques may be used to detect and eliminate such segments of lowest energy. According to another embodiment, less sophisticated techniques such as a simple energy thresholding may also be used: for example, a short-time energy obtained over a sliding window may first be computed for the entire signal, and all energy values below a predetermined threshold (e.g. below a given percentage of the overall energy range) may then be eliminated from the audio signal. Eventually, according to a particular feature, such thresholding techniques may be consolidated by taking into account other features of the analysed audio signal. For example, a zero-crossing rate may be taken into account to differentiate voiced speech sounds from other sounds within the signal (zero-crossing rate being known as a way to measure the smoothness of a signal, and voiced speech sounds being smoother than un-voiced sounds).

At step 15, a features extraction is performed on the input audio signal IAS (or on the normalized input audio signal). This operation aims at creating a parametric representation of the content of the input audio signal at a relatively lesser data rate, for subsequent processing. More particularly, at least one acoustic feature is extracted from the input audio signal, at a given sampling time interval. The at least one acoustic feature extracted at a given time (i.e. a sample) may be represented in the form of an acoustic features vector. Step 15 thus delivers a first sequence of features vectors sFV1 associated with the input audio signal.

A similar features extraction process in performed at step 15' with respect to the synthesized audio signal (or to the normalized synthesized audio signal), at the same sampling time interval, delivering a second sequence of features vectors sFV2 associated with the synthesized audio signal.

According to the disclosure, the acoustical features extracted at step 15 and 15' are the same (i.e. of a same type). All the features vectors of the first and second sequences of features vectors sFV1 and sFV2 thus include a same number of acoustical features (and at least one). However, the number of features vectors within the first and second sequences of features vectors sFV1 and sFV2 may not be the same, since the input audio signal IAS and the synthesized audio signal SAS may correspond to speeches that differ in terms of duration and allocution speed.

The acoustic features of the first sequence of features vectors (sFV1) and the acoustic features of the second sequence of features vectors (sFV2) are then converted into corresponding acoustic features associated with a same target reference voice RV, respectively at steps 16 and 16'. Converting the acoustical features extracted from the input audio signal (corresponding to the input speech) and from the synthesized audio signal (corresponding to a synthesized speech) into those of a same reference voice allows reducing as much as possible the difference between the speech characteristics at the frequency level (e.g. voice height and timbre) while keeping the linguistic information. To perform this conversion, techniques referred to as "Source Independent many-to-one Voice Conversion" techniques, allowing converting any language uttered by an arbitrary source speaker into utterances of a specific target speaker, may be employed. According to their general principle, these techniques rely on a training process to generate a voice conversion model, by using multiple parallel data sets of many pre-stored source speakers and a single target speaker. The voice conversion model is then used to convert acoustic features of a source speech to corresponding acoustic features of a target voice, and finally generate a target waveform - i.e. a synthesized target speech - from the converted features. Only the part of the "Source Independent Many-to-one Voice Conversion" techniques dedicated to acoustic features conversion is implemented in the context of the present disclosure (the part dedicated to the generation of a target waveform from the converted feature is not necessary to implement the proposed technique, and thus not used).

Groups of steps 11, 14 (optional), 15 and 16 on the one hand and steps 12, 13, 14' (optional), 15' and 16' on the other hand may be processed one after the other, whatever the order. However, according to an embodiment, considering the time needed by the automatic speech recognition system to process the input audio signal group of steps 12, 13, 14', 15' and 16' may be processed after group of steps 11, 14, 15 and 16. According to a preferred embodiment, these two groups of steps (or at least some of their steps) are processed in parallel in order to save computing time.

At step 17, once both step 16 and 16' have been carried out, a dynamic time warping distance (D) between the first sequence of converted features vectors (sCFV1) and the second sequence of converted features vectors (sCFV2) is computed. More particularly, applying a dynamic time warping algorithm makes it possible to align temporally the two converted sequences, which are representative of two speeches which may vary in duration and allocution speed. The computed dynamic time warping distance (D) is then compared to a predetermined threshold at step 17, and a piece of data representative of whether or not an audio adversarial attack is detected is delivered, at step 18, as a function of the result of this comparison.

According to a particular feature, a normalization step of the dynamic time warping distance may be carried out before the thresholding, by dividing the computed distance by the number of features vectors of the longest sequence, among the first sequence of converted features vectors (sCFV1) and the second sequence of converted features vectors (sCFV2). The length of the longest sequence of feature vectors is chosen as a normalization ratio since a dynamic time warping algorithm aims at matching every element from one sequence with one or more elements from the other sequence and vice versa. As a result, the dynamic time warping distance is calculated on a number of elements equivalent to the longest sequence. By normalizing the dynamic time warping distance that way, the predetermined threshold may thus be made more independent of the way the distance is computed.

According to the proposed technique, an audio adversarial attack with respect to the voice input is assumed to be going on if the computed dynamic time warping distance (possibly normalized) is above the predetermined threshold. Indeed, the dynamic time warping distance makes it possible to quantify or at least estimate how much the voice input has been altered when processed by the automatic speech recognition system ASR. When no audio adversarial attack is going on, the transcript outputted from the automatic speech recognition system ASR is normally a rather close word for word transcript of the original voice input VI, and the input audio signal IAS and the synthesized audio signal SAS should then be quite similar from a linguistic point of view, i.e. in the sense of the meaning of what is said. On the contrary, in presence of an audio adversarial attack, the synthesized audio signal resulting from the text-to-speech conversion of the transcript outputted by the automatic speech recognition system has a high probability to be quite different from the input audio signal from the linguistic point of view, resulting in a dynamic time warping distance having a higher value. The piece of data representative of a detection of an audio adversarial attack may take the form of a boolean representing an attack status, which is set to true if an attack is detected and false otherwise.

According to an embodiment, the method further includes transmitting the piece of data representative of a detection of an audio adversarial attack to a communication device initially intended to execute an action associated with the original voice input. In that way, the communication device may be warned when an attack is detected, and therefore be in position to block the execution of the malicious command which has replaced the original command as an effect of the adversarial attack.

Some particular implementations of the above-described general principle are now detailed below, according to various embodiments of the disclosure.

According to an embodiment, the acoustic features extracted from the input audio signal (at step 15) and from the synthesized audio signal (at step 15') belong to the group of mel-cepstrum coefficients, and the dynamic time warping distance computed at step 17 is a mel-cepstral-distortion-based dynamic time warping distance. Mel-cepstrum coefficients are commonly used features in the fields of speech recognition and speech synthesis, as they allow characterizing the spectral envelope of a signal in representing the acoustic filters formed by the resonant cavities of the vocal tract.

The Mel-Cepstral Distortion (MCD) may be defined as an extension of the simple Euclidian distance, such that:

$$MCD(v^{targ}, v^{ref}) = \frac{\alpha}{T} \sum_{t=0}^{T-1} \sqrt{\sum_{d=s}^{D} (v_d^{targ}(t) - v_d^{ref}(t))^2}$$

$$\alpha = \frac{10\sqrt{2}}{\ln 10} = 6.14185$$

where T is the number of timeframes of the utterance, D is the number of mel-cepstrum coefficients extracted by timeframe, $v^{ref}$ and $v^{targ}$ the vectors of mel-ceptrum coefficients associated with the input and synthesized audio signals respectively (i.e. the first sequence of converted features vectors sCFV1 associated with the input audio signal and the second sequence of converted features vectors sCFV2 associated with the synthesized audio signal), $\alpha$ is a scaling factor used mainly for historical reasons, and s is the starting dimension of the inner sum. According to the proposed technique, s is equal to 1, meaning that the zeroth cepstral dimension corresponding to an average audio signal power is excluded of the inner sum. In that way, the measure of the Mel-Cepstral Distortion is not influenced by the speaker's loudness of the signals to be compared.

Computing the mel-cepstral-distortion-based dynamic time warping distance corresponds to computing the minimum mel-cepstral-distortion obtainable by temporally aligning the first sequence of converted mel-cepstrum coefficients vectors sCFV1 associated with the input audio signal and the second sequence of converted mel-cepstrum coefficients vectors sCFV2 associated with the synthesized audio signal. In that way, the difference in the timing between the two sequences - corresponding to the difference between the two speech characteristics at the temporal level (duration and allocution speed) - impacts as little as possible the computed distance metric.

According to an embodiment, the conversion of some acoustic features into corresponding acoustic features associated with a target reference voice (RV), as carried out at steps 16 and 16', relies on a statistical voice conversion approach based on a Gaussian Mixture Model. More particularly, a Gaussian Mixture Model representing joint probability density of the source and the target acoustic features is trained in advance using parallel data consisting of utterance pairs of the source and the target speakers. The trained Gaussian Mixture Model allows determining the target acoustic features from the given source acoustic features based on a criterion such as Maximum Likelihood Estimation (MLE) of a spectral feature trajectory (trajectory-based conversion), without any linguistic restrictions. For example, in the case where the acoustic features belong to the group of mel-cepstrum coefficients, the mel-cepstrum coefficients may be converted into those of the target reference voice by Maximum Likelihood Parameter Generation (MLPG), after constructing the static and delta feature vectors (without the zeroth order of the mel-cepstrum coefficients which is not used in the mel-ceptral distance calculation, as already presented).

Source independent Gaussian Mixture Models are known to be reasonably efficient in many-to-one voice conversion without any adaptation processes, simply by being trained using parallel data sets consisting of utterance pairs of several pre-stored source speakers and the single target speaker. However, it has been shown that the source independent conversion performance can be improved with an adaptation process of the conversion model based on the use of limited amount of some utterances of the new speaker to be converted. The building of a parallel dataset (utterance pairs of the source and the target speakers) for training the model may be considered as an important workload, insomuch as several tens of phoneme-balanced sentences are generally required to train the Gaussian Mixture Models sufficiently for conversion performance. To alleviate this problem, according to an embodiment, it is proposed to generate the parallel training dataset in synthesizing the target speaker utterances data set from the pre-stores source speakers' utterances dataset by using the same text-to-speech process than the one used to convert the transcript generated by the automatic speech recognition system.

According to an embodiment, the target text-to-speech voice TV used to convert the transcript into the synthesized audio signal at step 13 and the target reference voice RV used to convert the acoustics features extracted from the input audio signal at steps 16 are configured to correspond to a same voice. In that way, some computational time may be saved, since the synthesized audio signal delivered at step 13 is already and directly associated with the target reference voice RV: only the acoustic features extracted from the input audio signal have to be converted at step 16, and step 16' for converting the acoustic features extracted from the synthesized audio signal is no more necessary.

According to other embodiments of the present disclosure, the above-described technique may be adapted to take into account cross-gender issues that may otherwise alter performance of the proposed audio adversarial attack detection method (due, for example, to differences between voices and timbers, when the voice associated with the input audio signal IAS, the voice associated with the synthesized audio signal SAS, and the target reference voice RV used to perform features conversion are not all of a same gender, i.e. some are male and others are female). To get around this difficulty, two main embodiments are proposed hereafter.

According to a first embodiment, the proposed technique includes automatically identifying a gender associated with the input audio signal (or with the voice input), at an early stage of the process. The target text-to-speech voice TV (used for the text-to-speech operation on the transcript at step 13) and the target reference voice RV (used for the acoustic features conversion at steps 16 and 16') are then configured or selected to be of the same gender as the previously identified gender.

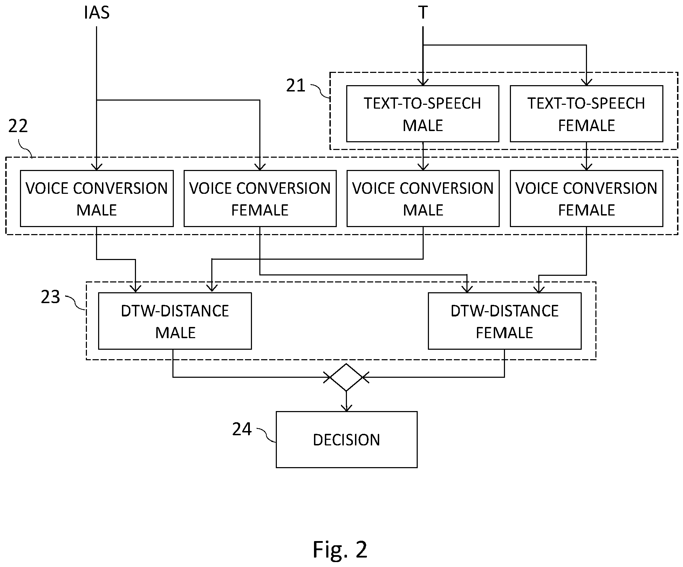

According to a second embodiment, illustrated in relation with **figure** 2, no gender identification is carried out, but the processing chain is at least partially duplicated into two branches, one associated with the male gender and the other with the female gender. More particularly, figure 2 is a simplified flow chart for illustrating the method for detecting an audio adversarial attack according to such an embodiment. For the sake of simplicity, the steps previously detailed in relation with figure 1 are not all represented on figure 2. As it may be observed on this figure, two synthesized audio signals, one per gender, are generated from the transcript T (at block 21, roughly corresponding to step 13 of figure 1), through text-to-speech operations (in other words, two target text-to-speech voices are used, a first target text-to-speech voice associated with a male gender and a second target text-to-speech voice associated with a female gender). The acoustic features extracted from the input audio signal on the one hand and from the synthesized audio signals on the other hand are converted depending on the gender (at block 22, roughly gathering steps 15, 15', 16 and 16' of figure 1), by using an adequate corresponding model (in other words, two target reference voices are used to perform the conversion, a first target reference voice associated with a male gender and a second target reference voice associated with a female gender). Two dynamic time warping distances are then computed (at block 23, roughly corresponding to step 17 of figure 1), a first dynamic time warping (DTW) distance associated with a male gender and a second dynamic time warping (DTW) distance associated with a female gender. Finally, the piece of data representative of a detection of an audio adversarial attack is delivered as a function of a result of a comparison between the predetermined threshold and the minimum dynamic time warping distance between the first and second dynamic time warping distances (at decision block 24, roughly corresponding to step 18 of figure 1).

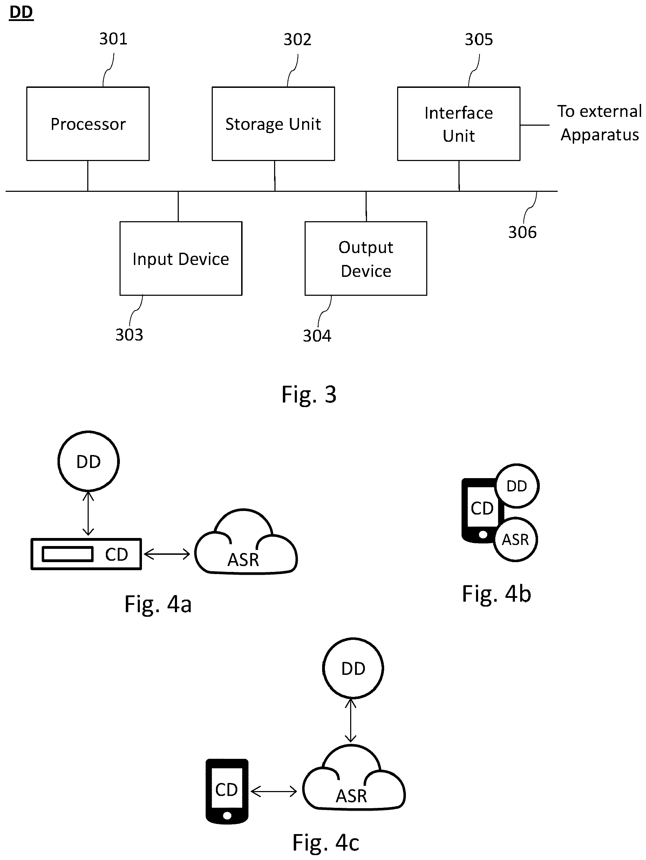

**Figure 3** shows a schematic block diagram illustrating an example of a detection device DD for detecting an audio adversarial attack with respect to a voice input processed by an automatic speech recognition system, according to an embodiment of the present disclosure. As illustrated in relation with **figures 4a, 4b and 4c,** the detection device DD may be deployed locally or located in a cloud infrastructure. In some embodiments, the detection device DD is connected to (as a standalone device, as depicted for example on figure 4a) or embedded into (as a component, as depicted for example on figure 4b) a communication device CD configured for processing voice inputs together with a machine-learning-based automatic speech recognition system ASR. The communication device CD may be for example a smartphone, a tablet, a computer, a speaker, a set-top box, a television set, a home gateway, etc., embedding voice recognition features. The automatic speech recognition system ASR may be implemented as a component of the communication device CD itself (as depicted on figure 4b), or, alternatively, be located in the cloud and accessible over a communication network, as a mutualised resource shared between a plurality of communication devices (as depicted on figure 4a or 4c, for example). In another embodiment, depicted on figure 4c, the detection device DD is implemented on a cloud infrastructure service, alongside with a distant automatic speech recognition service for example. Whatever the embodiment considered, the detection device DD is connected to an automatic speech recognition system, either directly or indirectly through a communication device.

Referring back to figure 3, the detection device DD includes a processor 301, a storage unit 302, an input device 303, an output device 304, and an interface unit 305 which are connected by a bus 306. Of course, constituent elements of the device DD may be connected by a connection other than a bus connection using the bus 306.

The processor 301 controls operations of the detection device DD. The storage unit 302 stores at least one program to be executed by the processor 301, and various data, including for example parameters used by computations performed by the processor 301, intermediate data of computations performed by the processor 301 such as the first sequence of features vectors associated with the input audio signal and the second sequence of features vectors associated with the synthesized audio signal, and so on. The processor 301 is formed by any known and suitable hardware, or software, or a combination of hardware and software. For example, the processor 301 is formed by dedicated hardware such as a processing circuit, or by a programmable processing unit such as a CPU (Central Processing Unit) that executes a program stored in a memory thereof.

The storage unit 302 is formed by any suitable storage or means capable of storing the program, data, or the like in a computer-readable manner. Examples of the storage unit 302 include non-transitory computer-readable storage media such as semiconductor memory devices, and magnetic, optical, or magneto-optical recording media loaded into a read and write unit. The program causes the processor 301 to perform a method for detecting an audio adversarial attack with respect to a voice input processed by an automatic speech recognition system according to an embodiment of the present disclosure as described previously. More particularly, the program causes the processor 301 to perform features extraction and conversion from the input audio signal provided as an input of the automatic speech recognition system on the one hand and from a synthesized audio signal resulting from a text-to-speech operation on the transcript delivered as an output of the automatic speech recognition system on the other hand, and to compute a dynamic time warping distance between the resulting first and second sequences of converted features vectors.

The input device 303 is formed for example by a microphone.

The output device 304 is formed for example by a processing unit configured to take decision regarding whether or not an audio adversarial attack is considered as detected, as a function of the result of the comparison between the computed dynamic time warping distance and a predetermined threshold.

The interface unit 305 provides an interface between the detection device DD and an external apparatus and/or system. The interface unit 305 is typically a communication interface allowing the detection device to communicate with an automatic speech recognition system and/or with a communication device, as already presented in relation with figures 4a, 4b and 4c. The interface unit 305 may be used to obtain the input audio signal provided as an input of the automatic speech recognition system and the transcript delivered as an output of the automatic speech recognition system. The interface unit 305 may also be used to transmit an attack status to the automatic speech recognition system and/or to a communication device expected to execute command associated with a voice input.

Although only one processor 301 is shown on figure 3, it must be understood that such a processor may include different modules and units embodying the functions carried out by device DD according to embodiments of the present disclosure. These modules and units may also be embodied in several processors 301 communicating and co-operating with each other.

While the disclosure has been described with reference to exemplary embodiments, it is to be understood that the disclosure can be embodied in various forms, and is not to be limited to the examples discussed above.

## Claims

1.  A method for detecting an audio adversarial attack with respect to a voice input (VI) processed by an automatic speech recognition system (ASR), the method being implemented by a detection device connected to the automatic speech recognition system, **wherein** the method comprises:

    obtaining (11) an input audio signal (IAS) associated with the voice input;
    obtaining (12) a transcript (T) resulting from the processing, by the automatic speech recognition system (ASR), of the input audio signal (IAS);
    converting (13) the transcript (T) into a synthesized audio signal (SAS) associated with a target text-to-speech voice (TV);
    extracting (15, 15'), at a sampling time interval, at least one acoustic feature of a same type, respectively from the input audio signal and from the synthesized audio signal, delivering a first sequence of features vectors (sFV1) associated with the input audio signal and a second sequence of features vectors (sFV2) associated with the synthesized audio signal;
    converting (16, 16') the acoustic features of the first sequence of features vectors (sFV1) and the acoustic features of the second sequence of features vectors (sFV2) to corresponding acoustic features associated with a target reference voice (RV), respectively delivering a first sequence of converted features vectors (sCFV1) associated with the input audio signal and a second sequence of converted features vectors (sCFV2) associated with the synthesized audio signal;

computing (17) a dynamic time warping distance (D) between the first sequence of converted features vectors (sCFV1) and the second sequence of converted features vectors (sCFV2); and

delivering (18) a piece of data representative of a detection of an audio adversarial attack, as a function of a result of a comparison between the dynamic time warping distance (D) and a predetermined threshold.

2. The method according to claim 1, **wherein** said at least one acoustic feature belongs to the group of mel-cepstrum coefficients **and wherein** said dynamic time warping distance is a mel-cepstral-distortion-based dynamic time warping distance.

3. The method according to claim 1, **wherein** the method comprises normalizing (14, 14') the input audio signal and the synthesized audio signal, before extracting the at least one acoustic feature from the signals.

4. The method according to claim 3, **wherein** normalizing the input audio signal and the synthesized audio signal comprises performing at least one of power normalization and silence part elimination on the signals.

5. The method according to claim 1, **wherein** the target text-to-speech voice (TV) and the target reference voice (RV) correspond to a same voice.

6. The method according to claim 1, **wherein** the method comprises normalizing the dynamic time warping distance before comparing the dynamic time warping distance with the predetermined threshold, by dividing the computed dynamic time warping distance by the number of features vectors of the longest sequence, among the first sequence of converted features vectors (sCFV1) and the second sequence of converted features vectors (sCFV2).

7. The method according to claim 1, **wherein** the method comprises identifying a gender associated with the input audio signal (IAS) **and wherein** the gender of the target text-to-speech voice (TV) and the gender of the target reference voice (RV) are the same as the identified gender.

8. The method according to claim 1, **wherein** converting the transcript, extracting at least one acoustical feature, converting the extracted acoustical features and computing a dynamic time warping distance are carried out twice, once with a first target text-to-speech voice and a first target reference voice associated with a male gender, delivering a first dynamic time warping distance associated with a male gender, and once with a second target text-to-speech voice and a second target reference voice associated with a female gender, delivering a second dynamic time warping distance associated with a female gender, **and wherein** delivering a piece of data representative of a detection of an audio adversarial attack is carried out as a function of a result of a comparison between the predetermined threshold and the minimum dynamic time warping distance between the first and second dynamic time warping distances.

9. The method according to claim 1, **wherein** the method further comprises transmitting the piece of data representative of a detection of an audio adversarial attack to a communication device in charge of executing an action associated with the voice input.

10. A detection device for detecting an audio adversarial attack with respect to a voice input processed by an automatic speech recognition system, the detection device being connected to the automatic speech recognition system, **wherein** the detection device comprises at least one processor configured for:

obtaining an input audio signal associated with the voice input;

obtaining a transcript resulting from the processing, by the automatic speech recognition system, of the input audio signal;

converting the transcript into a synthesized audio signal associated with a target text-to-speech voice;

extracting, at a sampling time interval, at least one acoustic feature of a same type, respectively from the input audio signal and from the synthesized audio signal, delivering a first sequence of features vectors associated with the input audio signal and a second sequence of features vectors associated with the synthesized audio signal;

converting the acoustic features of the first sequence of features vectors and the acoustic features of the second sequence of features vectors to corresponding acoustic features associated with a target reference voice, respectively delivering a first sequence of converted features vectors associated with the input audio signal and a second sequence of converted features vectors associated with the synthesized audio signal;

computing a dynamic time warping distance between the first sequence of converted features vectors and the second sequence of converted features vectors; and

delivering a piece of data representative of a detection of an audio adversarial attack, as a function of a result of a comparison between the dynamic time warping distance and a predetermined threshold.

11. A communication device configured to process a voice input together with an automatic speech recognition system, **wherein** the communication device comprises a detection device according to claim 10.

12. A cloud infrastructure service comprising an automatic speech recognition system, **wherein** the cloud infrastructure service further comprises a detection device according to claim 10.

13. A computer program product comprising instructions which, when the computer program is executed by a processor, cause the processor to carry out the method according to any one of claims 1 to 9.

14. A non-transitory computer-readable medium comprising a computer program product recorded thereon, the computer program product comprising instructions which, when the program is executed by a processor, cause the processor to carry out the method according to any one of claims 1 to 9.


**Patentansprüche**

1. Verfahren zum Detektieren eines feindlichen Audioangriffs in Bezug auf eine Stimmeingabe (VI), die durch ein automatisches Spracherkennungssystem (ASR) verarbeitet wird, wobei das Verfahren durch eine Detektionsvorrichtung implementiert wird, die mit dem automatischen Spracherkennungssystem verbunden ist, **wobei** das Verfahren umfasst:

   Erhalten (11) eines Eingangsaudiosignals (IAS), das der Stimmeingabe zugeordnet ist;
   Erhalten (12) einer Transkription (T), die sich aus der Verarbeitung des Eingangsaudiosignals (IAS) durch das automatische Spracherkennungssystem (ASR) ergibt;
   Umwandeln (13) der Transkription (T) in ein synthetisiertes Audiosignal (SAS), das einer Ziel-Text-zu-Sprache-Stimme (TV) zugeordnet ist;
   Extrahieren (15, 15') mindestens eines akustischen Merkmals eines selben Typs aus dem Eingangsaudiosignal bzw. aus dem synthetisierten Audiosignal in einer Abtastzeitspanne, Liefern einer ersten Folge von Merkmalsvektoren (sFV1), die dem Eingangsaudiosignal zugeordnet sind, und einer zweiten Folge von Merkmalsvektoren (sFV2), die dem synthetisierten Audiosignal zugeordnet sind;
   Umwandeln (16, 16') der akustischen Merkmale der ersten Folge von Merkmalsvektoren (sFV1) und der akustischen Merkmale der zweiten Folge von Merkmalsvektoren (sFV2) in entsprechende akustische Merkmale, die einer Zielreferenzstimme (RV) zugeordnet sind, die eine erste Folge (sCFV1) umgewandelter Merkmalsvektoren, die dem Eingangsaudiosignal zugeordnet sind, bzw. eine zweite Folge (sCFV2) umgewandelter Merkmalsvektoren, die dem synthetisierten Audiosignal zugeordnet sind, liefern;
   Berechnen (17) eines Abstands (D) des dynamischen Time-Warping zwischen der ersten Folge (sCFV1) umgewandelter Merkmalsvektoren und der zweiten Folge (sCFV2) umgewandelter Merkmalsvektoren; und
   Liefern (18) einer Dateneinheit, die eine Detektion eines feindlichen Audioangriffs repräsentiert, in Abhängigkeit von einem Ergebnis eines Vergleichs zwischen dem Abstand (D) des dynamischen Time-Warping und einem vorgegebenen Schwellenwert.

2. Verfahren nach Anspruch 1, **wobei** das mindestens eine akustische Merkmal zu einer Gruppe von Mel-Cepstrum-Koeffizienten gehört **und wobei** der Abstand des dynamischen Time-Warping ein Abstand des dynamischen Time-Warping auf der Grundlage einer Mel-Cepstrum-Verzerrung ist.

3. Verfahren nach Anspruch 1, **wobei** das Verfahren das Normieren (14, 14') des Eingangsaudiosignals und des synthetisierten Audiosignals vor dem Extrahieren des mindestens einen akustischen Merkmals aus den Signalen umfasst.

4. Verfahren nach Anspruch 3, **wobei** das Normieren des Eingangsaudiosignals und des synthetisierten Audiosignals das Ausführen einer Leistungsnormierung und/oder einer Beseitigung stiller Teile in den Signalen umfasst.

5. Verfahren nach Anspruch 1, **wobei** die Text-zu-Sprache-Stimme (TV) und die Zielreferenzstimme (RV) einer selben Stimme entsprechen.

6. Verfahren nach Anspruch 1, **wobei** das Verfahren das Normieren des Abstands des dynamischen Time-Warping vor dem Vergleichen des Abstands des dynamischen Time-Warping mit dem vorgegebenen Schwellenwert durch Dividieren des berechneten Abstands des dynamischen Time-Warping durch die Anzahl von Merkmalsvektoren der längsten Folge unter der ersten Folge (sCFV1) umgewandelter Merkmalsvektoren und der zweiten Folge (sCFV2) umgewandelter Merkmalsvektoren umfasst.

7. Verfahren nach Anspruch 1, **wobei** das Verfahren das Identifizieren eines Geschlechts umfasst, das dem Eingangsaudiosignal (IAS) zugeordnet ist, **und wobei** das Geschlecht der Ziel-Text-zu-Sprache-Stimme (TV) und das Geschlecht der Ziel-Referenzstimme (RV) dieselben wie das identifizierte Geschlecht sind.

8. Verfahren nach Anspruch 1, **wobei** das Umwandeln der Transkription, das Extrahieren mindestens eines akustischen Merkmals, das Umwandeln der extrahierten akustischen Merkmale und das Berechnen eines Abstands des dynamischen Time-Warping zweimal, einmal mit einer ersten Ziel-Text-zu-Sprache-Stimme und mit einer ersten Ziel-Referenz-Stimme, die einem männlichen Geschlecht zugeordnet sind, wobei sie einen ersten Abstand des dynamischen Time-Warping, der einem männlichen Geschlecht zugeordnet sind, liefern, und einmal mit einer zweiten Ziel-Text-zu-Sprache-Stimme und mit einer zweiten Ziel-Referenzstimme, die einem weiblichen Geschlecht zugeordnet ist, wobei sie einen zweiten Abstand des dynamischen Time-Warping, der einem weiblichen Geschlecht zugeordnet ist, liefern, ausgeführt werden, **und wobei** das Liefern einer Dateneinheit, die eine Detektion eines feindlichen Audioangriffs repräsentiert, in Abhängigkeit von einem Ergebnis eines Vergleichs zwischen dem vorgegebenen Schwellenwert und dem minimalen Abstand des dynamischen Time-Warping zwischen dem ersten und dem zweiten Abstand des dynamischen Time-Warping ausgeführt wird.

9. Verfahren nach Anspruch 1, **wobei** das Verfahren ferner das Senden der Dateneinheit, die eine Detektion eines feindlichen Audioangriffs repräsentiert, an eine Kommunikationsvorrichtung, die für die Ausführung einer der Stimmeingabe zugeordneten Aktion verantwortlich ist, umfasst.

10. Detektionsvorrichtung zum Detektieren eines feindlichen Audioangriffs in Bezug auf eine Stimmeingabe, die durch ein automatisches Spracherkennungssystem verarbeitet wird, wobei die Detektionsvorrichtung mit einem automatischen Spracherkennungssystem verbunden ist, **wobei** die Detektionsvorrichtung mindestens einen Prozessor umfasst, der konfiguriert ist zum:

Erhalten eines Eingangsaudiosignals, das der Stimmeingabe zugeordnet ist;
Erhalten einer Transkription, die sich aus der Verarbeitung des Eingangsaudiosignals durch das automatische Spracherkennungssystem ergibt;
Umwandeln der Transkription in ein synthetisiertes Audiosignal, das einer Ziel-Text-zu-Sprache-Stimme zugeordnet ist;
Extrahieren mindestens eines akustischen Merkmals eines selben Typs aus dem Eingangsaudiosignal bzw. aus dem synthetisierten Audiosignal in einer Abtastzeitspanne, Liefern einer ersten Folge von Merkmalsvektoren, die dem Eingangsaudiosignal zugeordnet sind, und einer zweiten Folge von Merkmalsvektoren, die dem synthetisierten Audiosignal zugeordnet sind;
Umwandeln der akustischen Merkmale der ersten Folge von Merkmalsvektoren und der akustischen Merkmale der zweiten Folge von Merkmalsvektoren in entsprechende akustische Merkmale, die einer Zielreferenzstimme zugeordnet sind, die eine erste Folge umgewandelter Merkmalsvektoren, die dem Eingangsaudiosignal zugeordnet sind, bzw. eine zweite Folge umgewandelter Merkmalsvektoren, die dem synthetisierten Audiosignal zugeordnet sind, liefern;
Berechnen eines Abstands des dynamischen Time-Warping zwischen der ersten Folge umgewandelter Merkmalsvektoren und der zweiten Folge umgewandelter Merkmalsvektoren; und
Liefern einer Dateneinheit, die eine Detektion eines feindlichen Audioangriffs repräsentiert, in Abhängigkeit von einem Ergebnis eines Vergleichs zwischen dem Abstand des dynamischen Time-Warping und einem vorgegebenen Schwellenwert.

11. Kommunikationsvorrichtung, die zum Verarbeiten einer Stimmeingabe zusammen mit einem automatischen Spracherkennungssystem konfiguriert ist, **wobei** die Kommunikationsvorrichtung eine Detektionsvorrichtung nach Anspruch 10 umfasst.

12. Cloud-Infrastrukturdienst, der ein automatisches Spracherkennungssystem umfasst, **wobei** der Cloud-Infrastrukturdienst ferner eine Detektionsvorrichtung nach Anspruch 10 umfasst.

13. Computerprogrammprodukt, das Anweisungen umfasst, die, wenn das Computerprogramm durch einen Prozessor ausgeführt wird, veranlassen, dass der Prozessor das Verfahren nach einem der Ansprüche 1 bis 9 ausführt.

14. Nichttransitorisches computerlesbares Medium, das ein darin aufgezeichnetes Computerprogrammprodukt umfasst, wobei das Computerprogrammprodukt Anweisungen umfasst, die, wenn das Programm durch einen Prozessor ausgeführt wird, veranlassen, dass der Prozessor das Verfahren nach einem der Ansprüche 1 bis 9 ausführt.

**Revendications**

1. Procédé de détection d'une attaque audio adverse par rapport à une entrée vocale (VI) traitée par un système de reconnaissance vocale automatique (ASR), le procédé étant mis en œuvre par un dispositif de détection connecté au système de reconnaissance vocale automatique, dans lequel le procédé comprend :

l'obtention (11) d'un signal d'entrée audio (IAS) associé à l'entrée vocale ;
l'obtention (12) d'une transcription (T) résultant du traitement, par le système de reconnaissance vocale automatique (ASR), du signal d'entrée audio (IAS) ;
la conversion (13) de la transcription (T) en un signal audio synthétisé (SAS) associé à une voix de texte-parole (TV) cible ;
l'extraction (15, 15'), à un intervalle de temps d'échantillonnage, d'au moins une caractéristique acoustique d'un même type, respectivement à partir du signal d'entrée audio et à partir du signal audio synthétisé, fournissant une première séquence de vecteurs de caractéristiques (sFV1) associée au signal d'entrée audio et une deuxième séquence de vecteurs de caractéristiques (sFV2) associée au signal audio synthétisé ;
la conversion (16, 16') des caractéristiques acoustiques de la première séquence de vecteurs de caractéristiques (sFV1) et des caractéristiques acoustiques de la deuxième séquence de vecteurs de caractéristiques (sFV2) en caractéristiques acoustiques correspondantes associées à une voix de référence (RV) cible, fournissant respectivement une première séquence de vecteurs de caractéristiques convertis (sCFV1) associée au signal d'entrée audio et une deuxième séquence de vecteurs de caractéristiques convertis (sCFV2) associée au signal audio synthétisé ;
le calcul (17) d'une distance d'alignement temporel dynamique (D) entre la première séquence de vecteurs de caractéristiques convertis (sCFV1) et la deuxième séquence de vecteurs de caractéristiques convertis (sCFV2) ; et
la fourniture (18) d'un élément de données représentatif d'une détection d'une attaque audio adverse, en fonction d'un résultat d'une comparaison entre la distance d'alignement temporel dynamique (D) et un seuil prédéterminé.

2. Procédé selon la revendication 1, dans lequel ladite au moins une caractéristique acoustique appartient au groupe de coefficients de mel-cepstre et dans lequel ladite distance d'alignement temporel dynamique est une distance d'alignement temporel dynamique basée sur la distorsion mel-cepstrale.

3. Procédé selon la revendication 1, dans lequel le procédé comprend la normalisation (14, 14') du signal d'entrée audio et du signal audio synthétisé, avant l'extraction de l'au moins une caractéristique acoustique des signaux.

4. Procédé selon la revendication 3, dans lequel la normalisation du signal d'entrée audio et du signal audio synthétisé comprend la réalisation d'au moins une parmi une normalisation de puissance et une élimination de partie de silence sur les signaux.

5. Procédé selon la revendication 1, dans lequel la voix de texte-parole (TV) cible et la voix de référence (RV) cible correspondent à une même voix.

6. Procédé selon la revendication 1, dans lequel le procédé comprend la normalisation de la distance d'alignement temporel dynamique avant la comparaison de la distance d'alignement temporel dynamique avec le seuil prédéterminé, en divisant la distance d'alignement temporel dynamique calculée par le nombre de vecteurs de caractéristiques de la séquence la plus longue, parmi la première séquence de vecteurs de caractéristiques convertis (sCFV1) et la deuxième séquence de vecteurs de caractéristiques convertis (sCFV2).

7. Procédé selon la revendication 1, dans lequel le procédé comprend l'identification d'un sexe associé au signal d'entrée audio (IAS) et dans lequel le sexe de la voix de texte-parole (TV) cible et le sexe de la voix de référence (RV) cible sont les mêmes que le sexe identifié.

8. Procédé selon la revendication 1, dans lequel la conversion de la transcription, l'extraction d'au moins une caractéristique acoustique, la conversion des caractéristiques acoustiques extraites et le calcul d'une distance d'alignement temporel dynamique sont réalisés deux fois, une fois avec une première voix de texte-parole cible et une première voix de référence cible associées à un sexe masculin, délivrant une première distance d'alignement temporel dynamique associée à un sexe masculin, et une fois avec une deuxième voix de texte-parole cible et une deuxième voix de référence cible associées à un sexe féminin, délivrant une deuxième distance d'alignement temporel dynamique associée à un sexe féminin, et dans lequel la fourniture d'un élément de données représentatif d'une détection d'une attaque audio adverse est réalisée en fonction d'un résultat d'une comparaison entre le seuil prédéterminé et la distance d'alignement temporel dynamique minimale entre les première et deuxième distances d'alignement temporel dynamique.

9. Procédé selon la revendication 1, dans lequel le procédé comprend en outre la transmission de l'élément de données représentatif d'une détection d'une attaque audio adverse à un dispositif de communication chargé de l'exécution d'une action associée à l'entrée vocale.

10. Dispositif de détection pour la détection d'une attaque audio adverse par rapport à une entrée vocale traitée par un système de reconnaissance vocale automatique, le dispositif de détection étant connecté au système de reconnaissance vocale automatique, dans lequel le dispositif de détection comprend au moins un processeur configuré pour :

   obtenir un signal d'entrée audio associé à l'entrée vocale ;
   obtenir une transcription résultant du traitement, par le système de reconnaissance vocale automatique, du signal d'entrée audio ;
   convertir la transcription en un signal audio synthétisé associé à une voix de texte-parole cible ;
   extraire, à un intervalle de temps d'échantillonnage, au moins une caractéristique acoustique d'un même type, respectivement à partir du signal d'entrée audio et à partir du signal audio synthétisé, fournissant une première séquence de vecteurs de caractéristiques associée au signal d'entrée audio et une deuxième séquence de vecteurs de caractéristiques associée au signal audio synthétisé ;
   convertir les caractéristiques acoustiques de la première séquence de vecteurs de caractéristiques et les caractéristiques acoustiques de la deuxième séquence de vecteurs de caractéristiques en caractéristiques acoustiques correspondantes associées à une voix de référence cible, fournissant respectivement une première séquence de vecteurs de caractéristiques convertis associée au signal d'entrée audio et une deuxième séquence de vecteurs de caractéristiques convertis associée au signal audio synthétisé ;
   calculer une distance d'alignement temporel dynamique entre la première séquence de vecteurs de caractéristiques convertis et la deuxième séquence de vecteurs de caractéristiques convertis ; et
   fournir un élément de données représentatif d'une détection d'une attaque audio adverse, en fonction d'un résultat d'une comparaison entre la distance d'alignement temporel dynamique et un seuil prédéterminé.

11. Dispositif de communication configuré pour traiter une entrée vocale conjointement à un système de reconnaissance vocale automatique, dans lequel le dispositif de communication comprend un dispositif de détection selon la revendication 10.

12. Service d'infrastructure en nuage comprenant un système de reconnaissance vocale automatique, dans lequel le service d'infrastructure en nuage comprend en outre un dispositif de détection selon la revendication 10.

13. Produit de programme informatique comprenant des instructions qui, quand le programme informatique est exécuté par un processeur, amènent le processeur à réaliser le procédé selon l'une quelconque des revendications 1 à 9.

14. Support non transitoire lisible par ordinateur comprenant un produit de programme informatique enregistré sur celui-ci, le produit de programme informatique comprenant des instructions qui, quand le programme est exécuté par un processeur, amènent le processeur à réaliser le procédé selon l'une quelconque des revendications 1 à 9.

(PT)

VI → IAS→ ASR → T

11 — OBTAINING
INPUT AUDIO SIGNAL IAS

12 — OBTAINING
TRANSCRIPT T

TV → 13 — CONVERTING TRANSCRIPT INTO
SYNTHESIZED AUDIO SIGNAL SAS

14 — NORMALIZING SIGNAL

14' — NORMALIZING SIGNAL

15 — EXTRACTING ACOUSTIC
FEATURES

15' — EXTRACTING ACOUSTIC
FEATURES

sFV1      RV      sFV2

16 — CONVERTING ACOUSTIC
FEATURES

16' — CONVERTING ACOUSTIC
FEATURES

sCFV1      sCFV2

17 — COMPUTING A DTW-DISTANCE
BETWEEN sCFV1 AND sCFV2

D

18 — DELIVERING PIECE OF DATA REPRESENTATIVE OF A
DETECTION OR NOT OF AN AUDIO ADVERSARIAL ATTACK

Fig. 1

Fig. 2

DD

301          302          305

| Processor | Storage Unit | Interface Unit | To external Apparatus |

Input Device          Output Device

303          304          306

## Fig. 3

DD

CD ↔ ASR

Fig. 4a

CD DD ASR

Fig. 4b

DD

CD ↔ ASR

Fig. 4c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Isolated and Ensemble Audio Preprocessing Methods for Detecting Adversarial Examples against Automatic Speech Recognition. **KRISHAN RAJARATNAM et al.** ARXIV.ORG. CORNELL UNIVERSITY LIBRARY, 11 September 2018
- **DU XIA et al.** A Unified Framework for Detecting Audio Adversarial Examples. *PROCEEDINGS OF THE 28TH ACM INTERNATIONAL CONFERENCE ON MULTIMEDIA, NEW YORK, NY, USA,* 12 October 2020, 3986-3994
- Characterizing Audio Adversarial Examples Using Temporal Dependency. **ZHUOLIN YANG et al.** ARXIV.ORG. CORNELL UNIVERSITY LIBRARY, 28 September 2018

- Novel Defense Method against Audio Adversarial Example for Speech-to-Text Transcription Neural Networks. **TAMURA KEIICHI et al.** 2019 IEEE 11TH INTERNATIONAL WORKSHOP ON COMPUTATIONAL INTELLIGENCE AND APPLICATIONS (IWCIA). IEEE, 09 November 2019, 115-120
- SirenAttack: Generating Adversarial Audio for End-to-End Acoustic Systems. **TIANYU DU et al.** ARXIV.ORG. CORNELL UNIVERSITY LIBRARY, 23 January 2019